# EUROPÄISCHE PATENTSCHRIFT

(11) **EP 0 729 871 B1**
(45) Veröffentlichungstag und Bekanntmachung des Hinweises auf die Patenterteilung: **16.06.1999**
(21) Anmeldenummer: 96103222.4
(22) Anmeldetag: 01.03.1996
(51) Int. Cl.: B60T 13/74

(54) **Kraftfahrzeug-Feststellbremse und Feststellbremsanlage für Kraftfahrzeuge**
Vehicle-parking brake and parking brake system for vehicles
Frein de stationnement pour véhicules et système de frein de stationnement pour véhicules

(30) Priorität: 03.03.1995 DE 19507566; 20.04.1995 DE 19514684
(43) Veröffentlichungstag der Anmeldung: 04.09.1996
(73) Patentinhaber: LUCAS INDUSTRIES PUBLIC LIMITED COMPANY, Solihull, West Midlands B91 3TX (GB)
(72) Erfinder: Heibel, Helmut, 56421 Moschheim (DE); Geilen, Hermann-Josef, 56743 Mendig (DE); Dieringer, Werner, 56179 Vallendar (DE)
(74) Vertreter: Beyer, Andreas, Dr.

(56) Entgegenhaltungen:
- EP-A- 0 296 703
- WO-A-89/10496
- WO-A-92/06876
- DE-A- 4 021 572
- DE-A- 4 129 934

## Beschreibung

Die Erfindung betrifft eine elektrisch betätigbare Kraftfahrzeug-Feststellbremse mit mechanischer Notbetätigung und eine Feststellbremsanlage für Kraftfahrzeuge. Feststellbremsen für Kraftfahrzeuge werden herkömmlicherweise mechanisch betätigt, z.B. mittels eines zwischen den Vordersitzen eines Kraftfahrzeugs angeordneten Handbremshebels. Aus Komfortgründen und um speziell den Raum zwischen den Vordersitzen eines Kraftfahrzeugs für andere Dinge freizuhalten, beispielsweise für ein Autotelefon, wird in neuerer Zeit häufiger die Forderung nach einer elektrisch betätigbaren Feststellbremse erhoben.

Elektrisch betätigbare Kraftfahrzeug-Feststellbremsen an sich sind bekannt. Eine elektrisch betätigbare Betriebs- und Feststellbremse für Kraftfahrzeuge ist in der DE-B-40 21 572 offenbart. Die darin beschriebene Bremse weist jedoch keine Einrichtung auf, mittels derer die Bremse bei einem Ausfall der Stromversorgung zugespannt oder gelöst werden könnte.

Aus der DE-B-41 29 934 ist eine Feststellbremsanlage für Personenkraftwagen bekannt, bei der zwei Feststelltrommelbremsen mittels eines Elektromotors zuspann- und lösbar sind. Hierzu betätigt der Elektromotor über einen Spindeltrieb einen Kurbelarm, der über ein Gestänge eine auf einer Achse drehbar gelagerte Scheibe betätigt, an der zwei zu je einer Bremse führende Bowdenzüge befestigt sind. Eine Drehung des Elektromotors bewirkt ein verschwenken des Kurbelarms und damit je nach Drehrichtung des Elektromotors eine Bewegung der Bowdenzüge in Zuspann- oder in Löserichtung. Bei einem Ausfall der Stromversorgung ist die beschriebene Feststellbremsanlage mittels einer Handkurbel zuspann- und lösbar, deren Drehbewegung über eine Schnecke, ein Schneckenrad und ein Klinkengesperre sowie einen am Schneckenrad gelagerten Hebel in eine Linearbewegung umgesetzt und auf einen mit dem Kurbelarm verbundenen Bowdenzug übertragen wird. Wie aus der vorstehenden Beschreibung ersichtlich ist, hat die in der DE-B-41 29 934 beschriebene Feststellbremsanlage einen relativ komplizierten Aufbau. Auch ist die dort offenbarte Notbetätigungseinrichtung nicht zur Verwendung mit Scheibenbremsen geeignet.

Aus der WO-A-92/06876 ist eine hydraulisch betätigte Scheibenbremse bekannt, die sowohl als Betriebsbremse als auch als Feststellbremse zu benutzen ist. Zur Erzielung der Feststellbremsfunktion werden die Bremsbacken hydraulisch gegen die Bremsscheibe gepreßt, woraufhin mit Hilfe eines Elektromotors eine Rändelmutter gegen einen Anschlag gefahren wird, um zu verhindern, daß die Bremsbacken sich wieder von der Bremsscheibe lösen, wenn der Hydraulikdruck nicht mehr aufrechterhalten wird. Zum Lösen der so festgestellten Bremsbacken muß wiederum Hydraulikdruck angelegt werden, um die Rändelmutter zu entlasten, die daraufhin mit Hilfe des Elektromotors in eine Stellung bewegt wird, in der die Bremsbacken wieder frei beweglich sind.

Aus der WO-A-89/10496 ist eine elektrisch betätigbare Scheibenbremse bekannt, die sowohl als Betriebsbremse als auch als Feststellbremse benutzt werden kann. Ein Elektromotor treibt über ein Planetengetriebe eine Spindel an, die einen Bremskolben gegen die Bremsscheibe preßt oder von der Bremsscheibe zurückfährt. Der Elektromotor hat einen Krafteingang, der mit einer Handkurbel verbunden werden kann, damit beispielsweise bei einem Werkstattaufenthalt der Bremskolben mechanisch vor- und zurückbewegt werden kann.

Der Erfindung liegt die Aufgabe zugrunde, eine elektrisch betätigbare Kraftfahrzeug-Feststellbremse bereitzustellen, die bei einem Ausfall der elektrischen Betätigung schnell und relativ komfortabel manuell von einem Benutzer eines Fahrzeuges bedienbar ist, in das diese Bremse eingebaut ist. Die bereitzustellende Feststellbremse soll darüber hinaus konstruktiv möglichst einfach und funktionssichersein.

Der Erfindung liegt ferner die Aufgabe zugrunde, eine verbesserte Feststellbremsanlage für Kraftfahrzeuge bereitzustellen.

Diese Aufgabe ist erfindungsgemäß mit einer elektrisch betätigbaren Kraftfahrzeug-Feststellbremse gelöst, die die im Anspruch 1 oder die im Anspruch 2 genannten Merkmale aufweist. Eine verbesserte Feststellbremsanlage für Kraftfahrzeuge weist die im Anspruch 13 genannten Merkmale auf.

Erfindungsgemäß ist eine elektrisch betätigbare Kraftfahrzeug-Feststellbremse dadurch konstruktiv bedeutend vereinfacht worden, daß die mechanische Notbetätigung mit Hilfe einer Biegewelle erfolgt, deren eines Ende mit einer Getriebeanordnung gekoppelt ist, die in oder an der Bremse selbst angeordnet ist. Das andere Ende der Biegewelle ist mit einer Handkurbel koppelbar, um die Drehbewegung der Handkurbel auf die Getriebeanordnung zu übertragen. Die so erzeugte Drehbewegung der Getriebeanordnung wiederum wird zum Zuspannen oder Lösen der Bremse herangezogen.

Die erfindungsgemäße Lösung eignet sich sowohl für Scheibenbremsen als auch für Trommelbremsen. In Verbindung mit Scheibenbremsen umfaßt die Getriebeanordnung eine Schnecke, die in ein Schneckenrad eingreift, welches mit einem Bremskolben der Scheibenbremse verbunden ist. Das Schneckenrad ist dabei bevorzugt koaxial zur Mittellängsachse des auch Betätigungskolben genannten Bremskolbens angeordnet und treibt eine koaxial zum Bremskolben angeordnete Welle an, die einen mit einem Außengewinde versehenen Endabschnitt aufweist, der wiederum mit einem Innengewinde in Eingriff steht, das an einer verdrehgesicherten, jedoch in Translationsrichtung bewegbaren Hülse ausgebildet ist. Auf diese Weise wird die dem Schneckenrad vermittelte Drehbewegung in eine Translationsbewegung der Hülse umgesetzt, die direkt zum Anpressen des Bremskolbens in Zuspannrichtung verwendet werden kann. Eine Drehung des Schneckenrades in entgegengesetzter Richtung führt zur Aufhebung des auf den Bremskolben wirkenden Anpressdrucks, woraufhin sich der Bremskolben selbsttätig soweit zurückbewegt, daß die Bremsbacken die Bremsscheibe wieder freigeben. Zu beachten ist in jedem Fall, daß die Hülse verdrehgesichert ist, da sie sich sonst mit der Welle mitdreht und keine Translationsbewegung erzeugt.

In einer bevorzugten Ausführungsform der soeben beschriebenen, erfindungsgemäßen Feststellbremse ist die Hülse durch einen Verdrehsicherungsring geführt, auf dem der Bremskolben in Axialrichtung gleitend verschiebbar ist. Die Hülse kann dabei beispielsweise als Außensechskant ausgeführt sein. Der Verdrehsicherungsring weist dann entsprechend einen Innensechskant auf. Der Verdrehsicherungsring ist seinerseits gegenüber dem Bremskolben durch einen geeignet ausgeführten Formschluß gegen ein Verdrehen gesichert.

Statt der vom Schneckenrad angetriebenen Welle mit ihrem Außengewinde und der mit dem Innengewinde versehenen Hülse kann die Umsetzung der Drehbewegung des Schneckenrades beispielsweise auch über eine Kugel-Rampenanordung erreicht werden.

Bei Trommelbremsen weist die Getriebeanordnung bevorzugt eine Schraubenspindel-Mutternanordnung mit einer die Schraubenspindel teilweise übergreifenden Hülse auf. Die Schraubenspindel-Mutternanordnung ist zwischen zwei Bremsbacken der Trommelbremse aufgenommen und vorteilhaft mit einem Elektromotor drehantreibbar gekoppelt. Die drehantreibbare Kopplung erfolgt vorzugsweise durch eine Ritzel-Gegenritzel-Anordnung, wobei das Gegenritzel entweder mit der Schraubenspindel oder der Mutter der Schraubenspindel-Mutternanordnung drehfest verbunden ist und mit einem Ritzel kämmt, das vorzugsweise über ein Untersetzungsgetriebe mit einem Elektromotor gekoppelt ist. Zum Beispiel kann die Mutter mit dem Gegenritzel drehfest (und einstückig) verbunden sein. In diesem Fall stützt sich an der Mutter bzw. dem Gegenritzel eine Hülse ab, die die Schraubenspindel zumindest teilweise übergreift und die bei einer Drehbewegung der Mutter um die Schraubenspindel sich gegenüber dieser in Längsrichtung bewegt. Dabei führt die Schraubenspindel-Mutternanordnung je nach Drehrichtung eine Kontraktions- oder Expansionsbewegung aus. Das freie Ende der Hülse und/oder das freie Ende der Schraubenspindel können jeweils mit einer Stegplatte eines Trägers zweier Trommelbremsbeläge verbunden sein. Das Gegenritzel ist dann auf einer zur Mittellängsachse der Betätigungskolben parallelen Achse angeordnet.

Gemäß einer bevorzugten Ausführungsform der zuletzt beschriebenen, erfindungsgemäßen Feststellbremse dreht sich das Gegenritzel bevorzugt auf der parallel zu dem Bremskolben angeordneten Schraubenspindel, die einen mit einem Außengewinde versehenen Abschnitt aufweist, der mit einem Innengewinde des Gegenritzels in Eingriff steht. Auf diese Weise wird die dem Gegenritzel vermittelte Drehbewegung in eine Translationsbewegung der Schraubenspindel umgesetzt, die direkt zum Anpressen der Bremsbacken in Zuspannrichtung verwendet werden kann. Eine Drehung des Gegenritzels in entgegengesetzter Richtung führt zur Aufhebung des auf die Bremsbacken wirkenden Anpressdrucks, woraufhin sich die Bremsbacken selbsttätig soweit zurückbewegen, daß diese die Bremstrommel wieder freigeben. Vorzugsweise ist die Schraubenspindel und die Hülse verdrehgesichert zwischen den Trägern der Bremsbeläge angeordnet, da sie sich sonst mit dem Gegenritzel mitdrehen könnte und keine Translationsbewegung erzeugen würde.

In einer Ausführungsform der erfindungsgemäßen Feststellbremse ist die Schraubenspindel und die Hülse durch eine Verdrehsicherungsgabelung, die jeweils mit einer Stegplatte eines Trägers zweier Bremsbeläge gleitend verschiebbar verbunden ist, gesichert. Die Verdrehsicherungsgabel ist gegenüber dem Bremsbacken durch einen geeignet ausgeführten Formschluß gegen ein Verdrehen gesichert.

Unabhängig davon, ob die erfindungsgemäße Kraftfahrzeug-Feststellbremse Scheibenbremsen oder Trommelbremsen umfaßt, befindet sich das andere Ende der Biegewelle an einem von der Bremse entfernt gelegenen Ort, beispielsweise im Kofferraum eines Kraftfahrzeugs oder aber auch im Innenraum eines Kraftfahrzeugs. Die elektrische Betätigung der erfindungsgemäßen Feststellbremse erfolgt mittels eines Elektromotors, der eine weitere, ebenfalls in das Schneckenrad eingreifende Schnecke bzw. ein weiteres, ebenfalls mit dem Gegenritzel zusammenwirkendes Ritzel antreibt. Bei einer solchen Ausführungsform ist der Elektromotor demnach in unmittelbarer Nähe der Bremse angeordnet bzw. an ihr befestigt.

Bei der erfindungsgemäßen Kraftfahrzeug-Feststellbremse ist das eine Ende der Biegewelle, d.h. das bremsenseitige Ende, mit dem einen Ende der Ankerwelle eines an der Bremse befestigten Elektromotors verbunden, die auch die Getriebeanordnung antreibt. Insbesondere treibt die Ankerwelle des Elektromotors die Schnecke bzw. das Ritzel der Getriebeanordnung an. Im Regelfall treibt demnach bei einer solchen Ausführungsform der Elektromotor die Schnecke bzw. das Ritzel zum Zuspannen und zum Lösen der Feststellbremse an. Fällt die Stromversorgung aus, kann mittels der Handkurbel die Biegewelle gedreht werden, die ihrerseits den Anker des Elektromotors und damit wiederum die Schnecke bzw. das Ritzel in Drehung versetzt. Je nach der gewählten Drehrichtung der Handkurbel kann die erfindungsgemäße Feststellbremse somit zugespannt oder gelöst werden.

Gemäß einer bevorzugten Ausführungsform einer erfindungsgemäßen Feststellbremse ist das andere Ende der Biegewelle mit einem Tellerrad verbunden und die Handkurbel weist ein Kegelrad auf, das mit dem Tellerrad beispielsweise durch Drücken in Eingriff bringbar ist. Eine solche Ausführungsform erlaubt es, die Biegewelle flach unter die Stelle zu führen, an der die Handkurbel im Notfall eingesetzt werden soll. Insbesondere ist es so möglich, die Biegewelle an eine bequem zugängliche Stelle im Innenraum eines Kraftfahrzeugs zu führen, bevorzugt in den Raum zwischen den beiden Vordersitzen. Dort kann das andere Ende der Biegewelle beispielsweise von einem Klappdeckel verdeckt sein.

Im Notfall braucht dann nur der Klappdeckel geöffnet zu werden und die mechanische Notbetätigung der Feststellbremse kann mit einer z.B. im Handschuhfach aufbewahrten Handkurbel vorgenommen werden. Im Normalfall erfolgt die Betätigung der erfindungsgemäßen Feststellbremse mittels eines elektrischen Schalters, der die Stromzufuhr zu dem erwähnten Elektromotor steuert und der beispielsweise im Armaturenbrett des Kraftfahrzeugs angeordnet ist. Um zu vermeiden, daß die zur Notbetätigung erforderliche Handkurbel separat aufbewahrt werden muß, ist gemäß einer bevorzugten Ausführungsform der erfindungsgemäßen Feststellbremse vorgesehen, daß das Kegelrad der Handkurbel federnd außer Eingriff mit dem Tellerrad vorgespannt ist und daß die Handkurbel um eine normal zur Mittelachse des Kegelrades verlaufende Achse schwenkbar ist und einen Nocken aufweist, der beim Schwenken der Handkurbel aus einer Ruhelage in eine Betätigungslage direkt oder mittelbar mit der Rückseite des Kegelrades in Eingriff kommt und so das Kegelrad entgegen der federnden Vorspannung in einen Eingriff mit dem Tellerrad drückt. Bei dieser Ausführungsform ist also die Handkurbel nicht separat untergebracht, sondern sie läßt sich um eine Achse in eine Ruhelage bzw. in eine Betätigungslage schwenken. Beim Schwenken in die Betätigungslage wird automatisch ein Eingriff zwischen dem Kegelrad und dem Tellerrad hergestellt. Der Übergang von der Ruhelage in die Betätigungslage findet bevorzugt durch eine Schwenkung der Handkurbel um 180° um die genannte Achse statt.

Da bei Kraftfahrzeugen regelmäßig zwei Feststellbremsen eingesetzt werden, ist eine erfindungsgemäße Feststellbremsanlage für Kraftfahrzeuge dadurch gekennzeichnet, daß zwei der vorbeschriebenen Feststellbremsen an ein und derselben Achse eines Kraftfahrzeugs verwendet werden, je eine auf jeder Seite des Kraftfahrzeugs. Damit die beiden Biegewellen im Notfall gemeinsam mittels einer einzigen Handkurbel in Drehung versetzt werden können, sind die anderen Enden jeder Biegewelle drehbar miteinander gekoppelt, beispielsweise durch zwei Zahnräder. Eines der beiden Zahnräder kann das Tellerrad sein, das bei einer Notbetätigung mit dem Kegelrad der Handkurbel in Eingriff kommt.

In einer besonders bevorzugten Ausführungsform der erfindungsgemäßen Feststellbremsanlage ist ein Differentialgetriebe mit einem Eingang und zwei Ausgängen vorhanden. Der Eingang des Differentialgetriebes ist dabei mittels der Handkurbel antreibbar, während die beiden Biegewellen mit je einem Ausgang des Differentialgetriebes verbunden sind. Eine solche Ausbildung hat den Vorteil, daß beide Feststellbremsen gleichmäßig stark zugespannt werden.

Gemäß einem Ausführungsbeispiel der erfindungsgemäß Feststellbremsanlage ist das Tellerrad mit dem Gehäuse des Differentialgetriebes drehfest verbunden und bildet somit den Eingang des Differentialgetriebes. Obwohl bevorzugte Ausführungsformen der erfindungsgemäßen Feststellbremsanlage an jeder Feststellbremse einen separaten Elektromotor aufweisen, ist es auch möglich, einen einzigen Elektromotor auf das fest mit dem Gehäuse des Differentialgetriebes verbundene Tellerrad wirken zu lassen. Aufgrund des Differentialgetriebes wird dann auch mit nur einem Elektromotor ein gleichmäßiger Spannkraftaufbau erreicht.

Zwei Ausführungsbeispiele einer erfindungsgemäßen Feststellbremse sowie einer erfindungsgemäßen Feststellbremsanlage werden nachfolgend unter Bezugnahme auf die beigefügten, schematischen Zeichnungen näher erläutert:

Es zeigt:
- Fig. 1: die Draufsicht auf eine teilweise im Schnitt dargestellte Schwimmsattelteilbelagscheibenbremse mit elektrisch betätigbarer Feststellbremse,
- Fig. 2: den Schnitt II-II aus Fig. 1,
- Fig. 3: eine Feststellbremsanlage mit zwei Feststellbremsen gemäß Fig. 1 und Fig. 2,
- Fig. 4: eine vergrößerte, genauere Darstellung des in der Feststellbremsanlage nach Fig. 3 verwendeten Differentialgetriebes,
- Fig. 5: die Draufsicht auf eine teilweise im Schnitt dargestellte Trommelbremse mit elektrisch betätigbarer Feststellbremse, und
- Fig. 6: eine Feststellbremsanlage mit zwei Feststellbremsen gemäß Fig. 5.

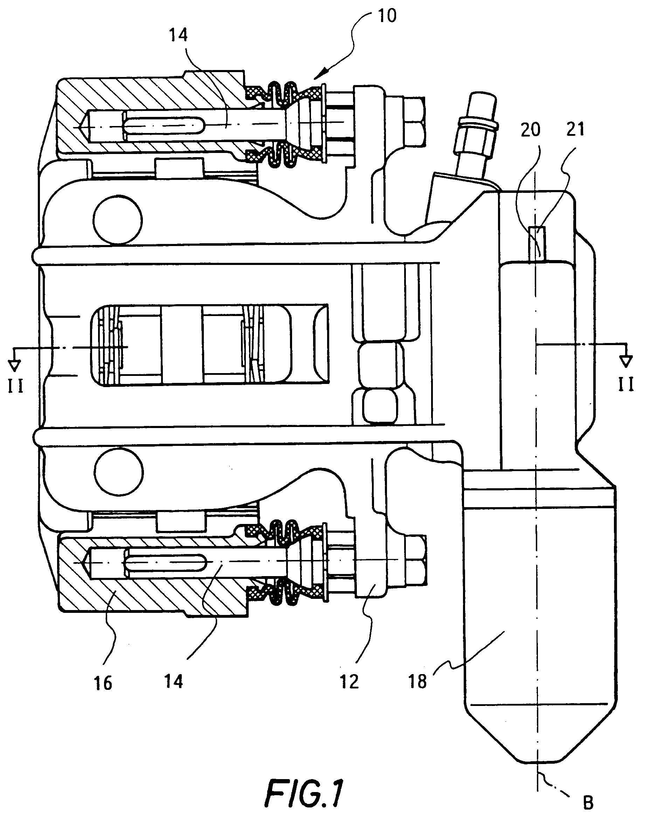

In Fig. 1 ist eine allgemein mit 10 bezeichnete Schwimmsattelteilbelagscheibenbremse für Kraftfahrzeuge dargestellt, die einen Bremsträger 12, zwei daran befestigte Führungsbolzen 14 und einen verschieblich auf den Führungsbolzen 14 geführten Schwimmsattel 16 aufweist. Die Schwimmsattelteilbelagscheibenbremse 10 hat einen für diese Art von Bremsen typischen konstruktiven Aufbau, weshalb im folgenden nur diejenigen Details näher erläutert werden, die von üblichen Bremsenkonstruktionen der genannten Art abweichen.

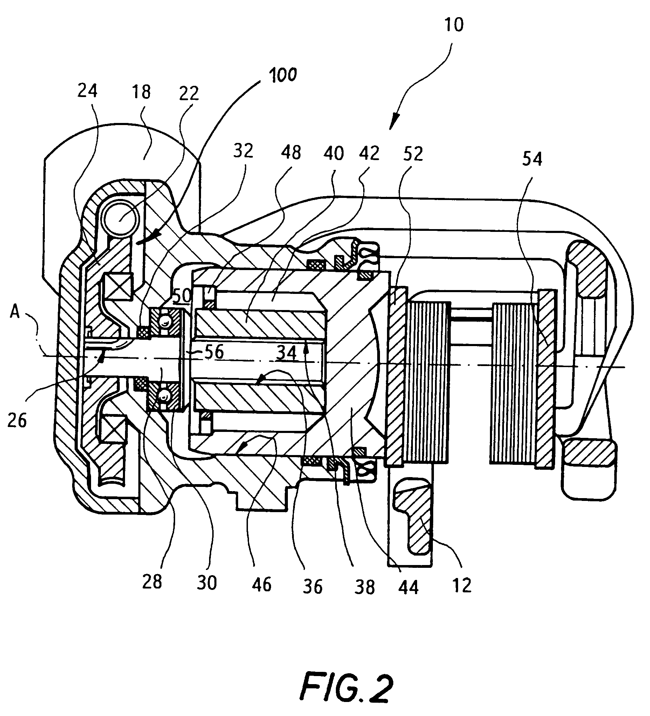

Die dargestellte Schwimmsattelteilbelagscheibenbremse 10 ist mit einer elektrisch betätigbaren Feststellbremse ausgerüstet. Hierzu ist am Bremsträger 12 ein Elektromotor 18 befestigt, dessen Ankerwelle 20 eine Schnecke 22 antreibt, welche in ein Schneckenrad 24 eingreift, das am Gehäuse der Bremse 10 drehbar gelagert ist (s. Fig. 2).

Wie aus Fig. 2 ersichtlich ist, ist das Schneckenrad 24 über eine bei 26 angeordnete Nut- und Federverbindung drehfest mit dem in Fig. 2 linken Ende einer Welle 28 verbunden, die ihrerseits mittels eines Kugellagers 30 im Gehäuse der Bremse 10 drehbar gelagert ist. Die für die Welle 28 im Gehäuse der Bremse 10 vorhandene Durchgangsbohrung ist durch eine Dichtung 32 flüssigkeitsdicht verschlossen. Die Welle 28 hat eine Längsachse A, die rechtwinklig zur Achse B der Ankerwelle 20 verläuft. Die Achse B verläuft somit zumindest im wesentlichen parallel zu einer hier nicht dargestellten Bremsscheibe der Bremse 10. Das andere Ende der Welle 28 wird von einem Endabschnitt 34 gebildet, auf dem eine Außengewinde 36 ausgebildet ist, das mit einem Innengewinde 38 einer Hülse 40 in Eingriff steht, die koaxial zur Welle 28 angeordnet ist und eine Länge hat, die etwa der Länge des Endabschnitts 34 entspricht. Die Hülse 40 ist vollständig in einer becherförmigen Ausnehmung 42 eines Brems- oder Betätigungskolbens 44 der Bremse 10 aufgenommen, der ebenfalls koaxial zur Welle 28 angeordnet und in einer Bohrung 46 des Gehäuses der Bremse aufgenommen ist.

Ein Verdrehsicherungsring 48 ist radial zwischen der Hülse 40 und dem Bremskolben 44 in der becherförmigen Ausnehmung 42 angeordnet. Der Verdrehsicherungsring 48, durch den sich die Hülse 40 erstreckt, stellt einen Formschluß zwischen der Außenseite der Hülse 40 und der durch die becherförmige Ausnehmung 42 gebildeten Innenseite des Bremskolbens 44 her, um die Hülse 40 gegen ein Verdrehen abzustützen. Die Außenseite der Hülse 40 kann beispielsweise als Außensechskant ausgeführt sein, während der Verdrehsicherungsring 48 mit einem entsprechenden Innensechskant versehen ist. Die Verdrehsicherung des Rings 48 gegenüber dem Bremskolben 44 wird wiederum durch einen Formschluß erreicht, beispielsweise durch zwei hier nicht dargestellte Vorsprünge in der becherförmigen Ausnehmung 42, die in den Verdrehsicherungsring 48 eingreifen. Es muß jedoch sichergestellt sein, daß der Bremskolben 44 auf dem Verdrehsicherungsring 48 in Axialrichtung entlanggleiten kann.

Der Bremskolben 44 ist in der Bohrung 46 längs der Achse A verschiebbar und an seinem in Fig. 2 rechten Ende in üblicher Weise gegenüber der Bohrung 46 abgedichtet. Bei einer Benutzung der Bremse 10 als Fahrzeug-Betriebsbremse wird der Bremskolben 44 durch Fluiddruck verschoben. Der Fluiddruck wird durch eine unter Druck stehende Hydraulikflüssigkeit auf den Bremskolben 44 übertragen, die über eine hier nicht dargestellte Zuleitung einem erweiterten Bereich 50 der Bohrung 46 zugeführt wird und die den Bremskolben 44 bezogen auf Fig. 2 nach rechts verschiebt, um einen Bremsbacken 52 gegen die nicht dargestellte Bremsscheibe zu pressen. In bekannter Weise wird dadurch auch der gegenüberliegende Bremsbacken 54 gegen die Bremsscheibe gepreßt.

Bei einer Benutzung der Bremse 10 als Feststellbremse werden die Bremsbacken 52, 54 normalerweise mittels des Elektromotors 18 zugespannt bzw. gelöst. Betätigt der Benutzer eines Kraftfahrzeugs einen beispielsweise im Armaturenbrett angeordneten Schalter für die Feststellbremse, so beginnt sich der Elektromotor 18 in Zuspannrichtung zu drehen und die von seiner Ankerwelle 20 angetriebene Schnecke 22 überträgt ihre Drehbewegung auf das Schneckenrad 24. Zusammen mit dem Schneckenrad 24 dreht sich die Welle 28 und ihr Endabschnitt 34 mit dem Außengewinde 36. Die durch den Verdrehsicherungsring 48 gegen Mitdrehen gesicherte Hülse 40 schraubt sich dadurch aus dem Endabschnitt 34 der Welle 28 heraus und drückt somit den Bremskolben 44 mechanisch in Fig. 2 nach rechts, wodurch die Bremsbacken 52, 54 an die Bremsscheibe gepreßt werden. Zur Ableitung der bei diesem Andrückvorgang entstehenden Gegenkraft in das Gehäuse der Bremse hat die Welle 28 zwischen der Hülse 40 und dem Kugellager 30 einen tellerförmigen Abschnitt 56 mit vergrößertem Durchmesser, der die beim Andrückvorgang entstehende Reaktionskraft über die Lagerschalen des Kugellagers 30 in das Gehäuse der Bremse 10 ableitet. Eine spezielle Arretierung der so mechanisch zugespannten Bremse 10 ist nicht erforderlich, da das Außengewinde 36 und das Innengewinde 38 und/oder das Schneckengetriebe selbsthemmend ausgelegt sind.

Zum Lösen der mechanisch zugespannten Bremse 10 wird der Elektromotor 18 mit umgekehrter Drehrichtung betrieben, woraufhin sich die Hülse 40 wieder auf das Außengewinde 36 der Welle 28 schraubt und dadurch den Bremskolben 44 entlastet. Der Bremskolben 44 bewegt sich dann schon aufgrund der durch die bremsscheibenseitigen Abdichtungen auf ihn übertragenen Federkräfte etwas zurück, d.h. in Fig. 2 nach links, wodurch die Feststellbremse gelöst ist.

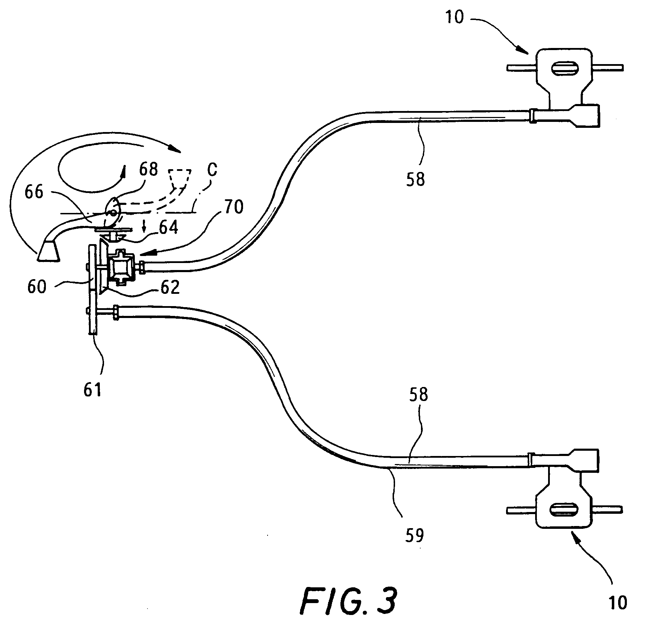

Im folgenden wird die mechanische Notbetätigung der zuvor beschriebenen Bremse 10 anhand einer Fahrzeugbremsanlage näher erläutert, die an einer Achse zwei der zuvor beschriebenen Bremsen 10 aufweist (s. Fig. 3). Um ein Zuspannen und Lösen der Feststellbremse auch dann zu ermöglichen, wenn kein Strom für die Elektromotoren 18 zur Verfügung steht, ist das freie Ende 21 der Ankerwelle 20 (s. Fig. 1) jedes Elektromotors 18 mit dem einen Ende einer Biegewelle 58 gekoppelt, deren anderes Ende in den Innenraum des Kraftfahrzeugs geführt ist, beispielsweise in den Raum zwischen den beiden Vordersitzen. Zur Koppelung mit der Biegewelle ist das freie Ende 21 der Ankerwelle 20 als Vierkant ausgebildet, auf den ein entsprechendes Anschlußstück der Biegewelle 58 aufschiebbar ist. Die Biegewelle kann auch eine Hülle 59 aufweisen, die so ausgebildet ist, daß das bremsseitige Ende der Hülle auf der Bremse einrastet.

Die beiden im Innenraum des Kraftfahrzeugs angeordneten Enden der Biegewellen 58 sind mittels zweier ineinander eingreifender Zahnräder 60, 61 miteinander gekoppelt. Ein Tellerrad 62 ist mit einem Kegelrad 64 in Eingriff bringbar, welches an einer Handkurbel 66 befestigt ist, die um eine Achse C schwenkbar ist. Die in Fig. 3 mit durchgezogenen Linien wiedergegebene Stellung der Handkurbel 66 stellt dabei die Ruhelage derselben dar, während die mit gestrichelten Linien gezeichnete Stellung der Handkurbel 66 die Betätigungsstellung derselben ist. Am dem griffseitigen Ende der Handkurbel 66 gegenüberliegenden Ende derselben ist ein Nocken 68 ausgeformt, der bewirkt, daß beim Schwenken der Handkurbel 66 aus der Ruhestellung in die Betätigungsstellung das bezüglich Fig. 3 federnd nach oben vorgespannte Kegelrad 64 in einen Eingriff mit dem Tellerrad 62 gedrückt wird. Ein Drehen der Handkurbel 66 in ihrer Betätigungsstellung führt dann zur Drehung der beiden Biegewellen 58 und damit, je nach gewählter Drehrichtung, zum Zuspannen oder Lösen der Feststellbremse.

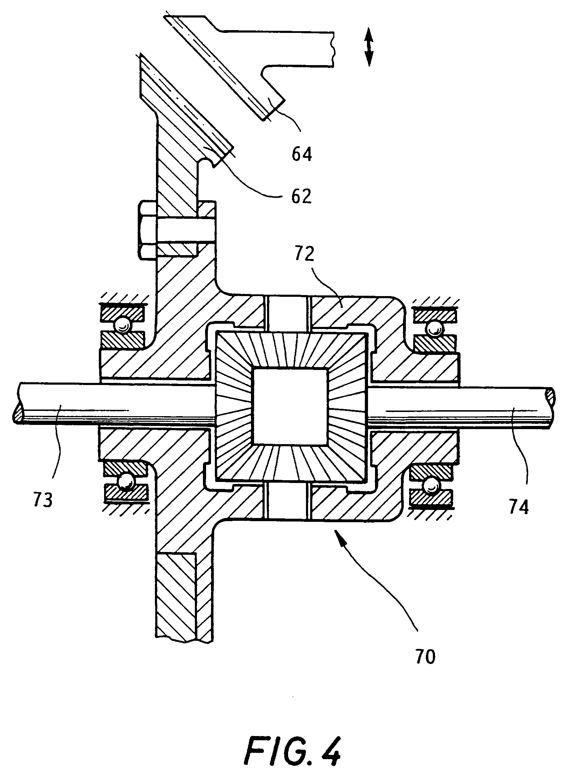

Damit bei einem Ausfall der Stromversorgung eine Drehung der Handkurbel 66 zu einem gleichmäßigen Zuspannen der Feststellbremse auf beiden Achsseiten führt, ist ein Differentialgetriebe 70 mit einem Eingang und zwei Ausgängen vorhanden, das in Fig. 4 genauer dargestellt ist.

Aus Fig. 4 ist ersichtlich, daß das Tellerrad 62 drehfest mit dem drehbar gelagerten Gehäuse 72 des Differentialgetriebes 70 verbunden ist. Das Tellerrad 62 stellt somit den Eingang des Differentialgetriebes dar. Durch das Gehäuse 72 hindurch erstrecken sich zwei als Ausgänge des Differentialgetriebes dienende Abtriebswellen 73, 74, von denen die in Fig. 4 rechte Abtriebswelle 74 mit der Biegewelle 58 verbunden ist, die zu der in Fig. 3 oben wiedergegebenen Bremse 10 führt. Die andere Abtriebswelle 73 treibt das in Fig. 3 obere Zahnrad 60 an, das seine Drehbewegung über das zweite Zahnrad 61 auf die zweite Biegewelle 58 überträgt, die zur in Fig. 3 unten gezeigten Bremse 10 führt.

Durch die Einbeziehung des Differentialgetriebes 70 in die Feststellbremsanlage ist gewährleistet, daß unabhängig von den beim Zuspannen auftretenden Widerständen ein gleichmäßiges Zuspannen beider Feststellbremsen erfolgt. Bei der gezeigten Anordnung der Feststellbremsanlage drehen sich die beiden Biegewellen 58 auch dann, wenn die Feststellbremsen durch die Elektromotoren 18 elektrisch betätigt werden. Dies hat jedoch keine weiteren Auswirkungen, da das Kegelrad 64 der Handkurbel 66 nur bei einem Ausfall der Stromversorgung mit dem Tellerrad in Eingriff ist und ansonsten, d.h. in der Ruhestellung der Handkurbel 66, federnd außer Eingriff mit dem Tellerrad 62 vorgespannt ist. Um die in einem Notfall von Hand aufzubringende Betätigungskraft der Feststellbremsanlage möglichst niedrig zu halten, sind die Elektromotoren 18 bevorzugt von einem Typ, der keinen Permanentmagneten aufweist.

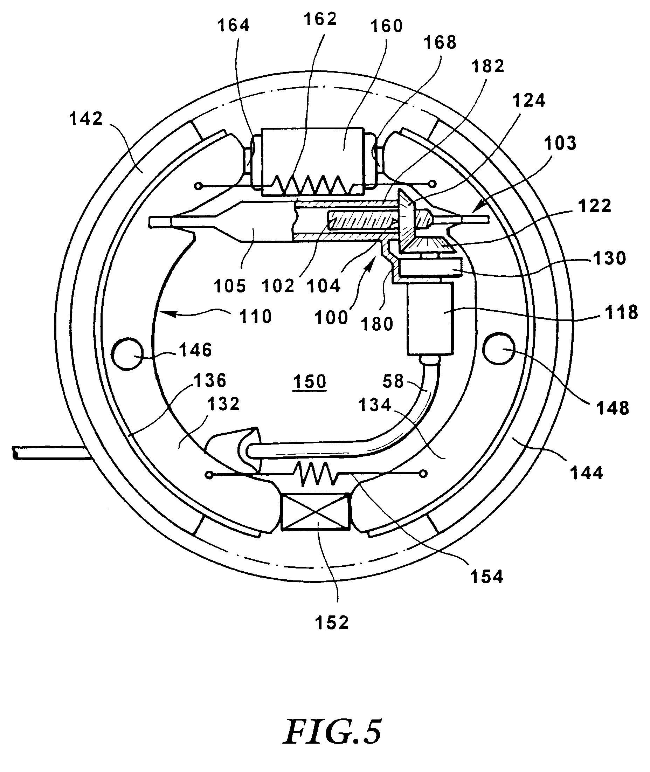

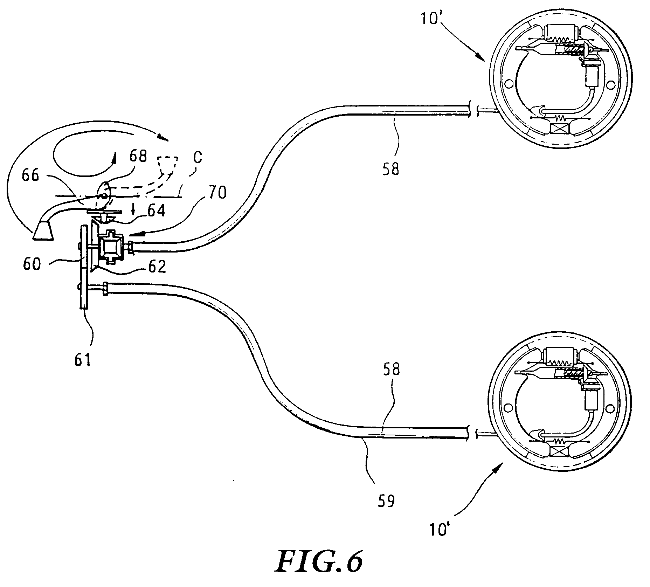

In den Figuren 5 und 6 ist zweites Ausführungsbeispiel einer Kraftfahrzeug-Feststellbremse und einer Feststellbremsanlage dargestellt, das sich von dem zuvor beschriebenen, ersten Ausführungsbeispiel dadurch unterscheidet, daß Trommelbremsen statt Scheibenbremsen zum Einsatz kommen.

In Fig. 5 ist eine allgemein mit 10' bezeichnete Trommelbremse für Kraftfahrzeuge dargestellt, die eine Ankerplatte 150, zwei daran befestigte Bremsbacken und einen Radbremszylinder aufweist. Auch die Trommelbremse 10' hat einen für diese Art von Bremsen typischen konstruktiven Aufbau, weshalb im folgenden nur die davon abweichenden Details näher erläutert werden.

Analog der Scheibenbremse 10 des ersten Ausführungsbeispiels ist die dargestellte Trommelbremse 10' mit einer elektrisch betätigbaren Feststellbremse ausgerüstet. Die Trommelbremse 10' weist zwei Bremsbacken 110, 112 auf, an deren Träger 136, 138 jeweils eine radial nach innen weisende Stegplatte 132, 134 angeordnet ist und an deren äußeren Umfangsfläche je ein Reibbelag 142, 144 angeordnet ist.

Die beiden Bremsbacken 132, 134 sind durch Niederhalteeinrichtungen 146, 148 gegenüber einer Ankerplatte 150 koplanar zu dieser bewegbar festgelegt. Die beiden halbkreisförmigen Bremsbacken 110, 112 sind an ihrem jeweiligen einen Ende (Fig. 5 unten) durch ein Stützlager 152 gegeneinander abgestützt und werden von einer ersten Bremsbackenrückzugfeder 154 aufeinander zu gezogen. Die jeweiligen anderen Enden der Bremsbacken 110, 112 (Fig. 5 oben) sind durch einen hydraulischen Doppelkolben-Radbremszylinder 160 gegeneinander abgestützt und werden von einer zweiten Bremsbackenrückzugfeder 162 aufeinander zu gezogen. Parallel zu der Mittelachse der beiden Betätigungskolben 164, 168 des Doppelkolben-Radbremszylinders 160 ist zum Zentrum der Trommelbremse 10' hin versetzt eine Schraubenspindel-Hülsenanordnung 102, 105 vorgesehen. Das freie Ende der Hülse 105 bzw. das freie Ende 103 der Schraubenspindel 102 ist mit einer der beiden Stegplatten 132, 134 verdrehgesichert verbunden. Dazu sind die beiden jeweiligen freien Enden abgeflacht und geschlitzt ausgebildet, so daß sich eine gabelförmige Gestalt ergibt. Diese gabelförmigen Enden umgreifen jeweils einen Vorsprung der entsprechenden Stegplatte. Auf der Schraubenspindel 102 sitzt eine Mutter 104, die an ihrem Außenumfang ein Gegenritzel 124 aufweist, das mit einem Ritzel 122 kämmt. Beim gezeigten Ausführungsbeispiel sind das Ritzel 122 und das Gegenritzel 124 als Kegelräder ausgeführt, so daß die beiden Ritzel 122 und 124 einen Winkeltrieb bilden.

Das Ritzel 122 ist über ein Untersetzungsgetriebe 130 mit einem Elektromotor 118 gekoppelt, der über einen Flansch 180 mit der Hülse 105 starr und drehfest verbunden ist. Die Hülse 105 ist gegenüber dem Gegenritzel 124 durch ein mit 182 angedeutetes Lager abgestützt. Darüber hinaus kann die komplette Getriebeanordnung 100 mit der Hülse 105 staubdicht gekapselt sein, um zu verhindern, daß Abrieb von den Reibbelägen 142, 144 die Funktion des Elektromotors 118, des Untersetzungsgetriebes 130, des Ritzels 122, des Gegenritzels 124, der Schraubenspindel 102 oder Mutter 104 beeinträchtigt.

Zum Lösen der mechanisch zugespannten Trommelbremse 10' wird der Elektromotor 118 betätigt, woraufhin sich das Gegenritzel 124 auf der Schraubenspindel 102 nach außen (zum freien Ende 103 der Schraubenspindel 102 hin) schraubt und dadurch die Bremsbacken 110, 112 entlastet. Die Reibbeläge 142, 144 bewegen sich dann aufgrund der Zugkräfte der Backenrückzugfeder etwas zurück, womit die Feststellbremse gelöst ist.

Die in Figur 6 gezeigte Feststellbremsanlage unterscheidet sich von derjenigen der Figur 3 nur dadurch, daß statt zweier Scheibenbremsen 10 zwei Trommelbremsen 10' zum Einsatz kommen. Wie bei der Feststellbremsanlage gemäß Fig. 3 ist das freie Ende der Ankerwelle jedes Elektromotors 118 mit dem einen Ende einer Biegewelle 58 gekoppelt. Die mechanische Notbetätigung der Feststellbremsanlage gemäß Fig. 6 erfolgt daher in gleicher Weise wie im Zusammenhang mit Fig. 3 beschrieben.

## Patentansprüche

1. Elektrisch betätigbare Kraftfahrzeug-Feststellbremse mit mechanischer Notbetätigung, wobei die Feststellbremse eine Trommelbremse (10') ist, dadurch gekennzeichnet, daß deren Bremsbacken (110, 112) mittels einer in oder an der Bremse angeordneten und einen Krafteingang sowie einen Kraftausgang aufweisenden Getriebeanordnung (100) zuspann- und lösbar sind, wobei der Krafteingang der Getriebeanordnung (100) mit einem Ende einer Biegewelle (58) gekoppelt ist, deren anderes, entfernt von der Bremse angeordnetes Ende mit einer Handkurbel (66) koppelbar ist, um die Feststellbremse bei einem Ausfall der elektrischen Betätigung mechanisch betätigen zu können, und wobei das eine Ende der Biegewelle (58) mit dem einen Ende (21) der Ankerwelle (20) eines an der Bremse befestigten Elektromotors (118) verbunden ist, die auch die Getriebeanordnung (100) antreibt.

2. Elektrisch betätigbare Kraftfahrzeug-Feststellbremse mit mechanischer Notbetätigung, wobei die Feststellbremse eine Scheibenbremse ist, insbesondere eine Schwimmsattelteilbelagscheibenbremse (10), deren Bremsbacken (52, 54) mittels einer in oder an der Bremse angeordneten und einen Krafteingang sowie einen Kraftausgang aufweisenden Getriebeanordnung (100) zuspann- und lösbar sind, und wobei die Bremse einen die Getriebeanordnung (100) antreibenden Elektromotor (18) aufweist, dadurch gekennzeichnet, daß
- der Krafteingang der Getriebeanordnung (100) mit einem Ende einer Biegewelle (58) gekoppelt ist, deren anderes, entfernt von der Bremse angeordnetes Ende mit einer Handkurbel (66) koppelbar ist, um die Feststellbremse bei einem Ausfall der elektrischen Betätigung mechanisch betätigen zu können,
- das eine Ende der Biegewelle (58) mit dem einen Ende (21) der Ankerwelle (20) des Elektromotors (18) verbunden ist,
- die Getriebeanordnung (100) eine Schnecke (22) umfaßt, die in ein Schneckenrad (24) eingreift, welches mit einem Bremskolben (44) der Scheibenbremse verbunden ist, und daß
- die Ankerwelle (20) des Elektromotors (18) die Schnecke (22) drehantreibt.

3. Kraftfahrzeug-Feststellbremse nach Anspruch 2,
dadurch gekennzeichnet, daß das Schneckenrad (24) eine koaxial zum Bremskolben (44) angeordnete Welle (28) antreibt, die einen mit einem Außengewinde (36) versehenen Endabschnitt (34) aufweist, der mit einem Innengewinde (38) in Eingriff steht, das an einer verdrehgesicherten, in Translationsrichtung bewegbaren Hülse (40) ausgebildet ist.

4. Kraftfahrzeug-Feststellbremse nach Anspruch 3,
dadurch gekennzeichnet, daß die Hülse (40) durch einen Verdrehsicherungsring (48) geführt ist, auf dem der Bremskolben (44) gleitend in Axialrichtung verschiebbar ist.

5. Kraftfahrzeug-Feststellbremse nach Anspruch 1,
dadurch gekennzeichnet, daß die Getriebeanordnung (100) eine Schraubenspindel-Mutternanordnung (102, 104) aufweist, die zwischen zwei Bremsbacken (110, 112) aufgenommen ist und mit einem Elektromotor bzw. mit dem Elektromotor (118) drehantreibbar gekoppelt ist.

6. Kraftfahrzeug-Feststellbremse nach Anspruch 5,
dadurch gekennzeichnet, daß die Mutter (104) an ihrem Außenumfang ein Gegenritzel (124) aufweist, dessen Drehung eine Expansions- oder Kontraktionsbewegung der Schraubenspindel-Mutternanordnung (102, 104) bewirkt, wobei das Gegenritzel (124) mit einem Ritzel (122) kämmt, das vorzugsweise über ein Untersetzungsgetriebe (130) mit dem Elektromotor (118) gekoppelt ist.

7. Kraftfahrzeug-Feststellbremse nach Anspruch 6,
dadurch gekennzeichnet, daß das Ritzel (122) und das Gegenritzel (124) einen Winkeltrieb bilden.

8. Kraftfahrzeug-Feststellbremse nach einem der Ansprüche 5 bis 7,
dadurch gekennzeichnet, daß an der Mutter (104) mit dem Gegenritzel (124) eine Hülse (105) abgestützt ist, die die Schraubenspindel (102) zumindest teilweise übergreift und zusammen mit dieser bei einer Rotation der Mutter (104) zum Ausüben der Expansions- oder Kontraktionsbewegung eingerichtet ist.

9. Kraftfahrzeug-Feststellbremse nach einem der Ansprüche 5 bis 8,
dadurch gekennzeichnet, daß das freie Ende der Hülse (105) und/oder das freie Ende der Schraubenspindel (102) mit jeweils einer Stegplatte (132, 134) eines Trägers (136, 138) zweier Trommelbremsbeläge (142, 144) vorzugsweise verdrehgesichert verbunden sind.

10. Kraftfahrzeug-Feststellbremse nach einem der vorhergehenden Ansprüche,
dadurch gekennzeichnet, daß das andere Ende der Biegewelle (58) mit einem Tellerrad (62) verbunden ist und die Handkurbel (66) ein mit dem Tellerrad (62) in Eingriff bringbares Kegelrad (64) aufweist.

11. Kraftfahrzeug-Feststellbremse nach Anspruch 10,
dadurch gekennzeichnet, daß das Kegelrad (64) federnd außer Eingriff mit dem Tellerrad (62) vorgespannt ist und die Handkurbel (66) um eine normal zur Mittelachse des Kegelrades (64) verlaufende Achse (C) schwenkbar ist und einen Nocken (68) aufweist, der beim Schwenken der Handkurbel (66) aus einer Ruhelage in eine Betätigungslage direkt oder mittelbar mit der Rückseite des Kegelrades (64) in Eingriff kommt und das Kegelrad entgegen der federnden Vorspannung in einen Eingriff mit dem Tellerrad (62) drückt.

12. Kraftfahrzeug-Feststellbremse nach einem der vorhergehenden Ansprüche,
dadurch gekennzeichnet, daß das andere Ende der Biegewelle (58) zur Anordnung im Innenraum eines Kraftfahrzeugs bestimmt ist, insbesondere zur Anordnung im Raum zwischen den beiden Vordersitzen.

13. Feststellbremsanlage für Kraftfahrzeuge,
gekennzeichnet durch zwei Kraftfahrzeug-Feststellbremsen nach einem der Ansprüche 1 bis 5, die ein und derselben Achse eines Kraftfahrzeugs zugehörig sind und deren Biegewellen (58) am anderen Ende jeder Biegewelle drehbar miteinander gekoppelt sind, um gemeinsam mittels der Handkurbel (66) mechanisch betätigbar zu sein.

14. Feststellbremsanlage nach Anspruch 13,
dadurch gekennzeichnet, daß die beiden Biegewellen (58) mit je einem Ausgang eines Differentialgetriebes (70) verbunden sind und der Eingang des Differentialgetriebes mittels der Handkurbel (66) antreibbar ist.

15. Feststellbremsanlage nach Anspruch 14,
dadurch gekennzeichnet, daß das Tellerrad (62) mit dem Gehäuse (72) des Differentialgetriebes (70) drehfest verbunden ist.

## Claims

1. An electrically actuatable automotive parking brake with mechanical emergency actuation, wherein the parking brake is a drum brake (10'),
characterized in that the brake shoes (110, 112) thereof can be applied or released by means of a gear arrangement (100) which is arranged within or at the brake and which comprises a power input as well as a power output, with the power input of the gear arrangement (100) being coupled with one end of a flexible shaft (58) whose other end that is arranged remote from the brake is adapted to be coupled with a manual crank (66), in order to be able to actuate the parking brake mechanically in the case of a failure of the electrical actuation, and with the one end of the flexible shaft (58) being connected with one end (21) of an armature shaft (20) of an electric motor (118) fastened to the brake, which shaft (20) also drives the gear arrangement (100).

2. An electrically actuatable automotive parking brake with mechanical emergency actuation, wherein the parking brake is a disc brake, in particular a spot-type sliding caliper disc brake (10), the brake shoes (52, 54) of which can be applied or relased by means of a gear arrangement (110) which is arranged within or at the brake and which comprises a power input as well as a power output, and wherein the brake includes an electric motor (18) driving the gear arrangement (100), characterized in that
- the power input of the gear arrangement (100) is coupled with one end of a flexible shaft (58) whose other end that is remote from the brake is adapted to be coupled with a manual crank (66) in order to be able to actuate the parking brake mechanically in the case of a failure of the electrical actuation,
- the one end of the flexible shaft (58) is connected with one end (21) of the armature shaft (20) of the electric motor (18),
- the gear arrangement (100) comprises a worm (22) which engages a worm gear (24) connected with a brake piston (44) of the disc brake, and that
- the armature shaft (20) of the electric motor (18) rotatingly drives the worm (22).

3. An automotive parking brake according to claim 2,
characterized in that the worm gear (24) drives a shaft (28) which is arranged coaxially with the brake piston (44) and which comprises an end portion (34) provided with a male thread (36) which is in engagement with a female thread (38) formed at a sleeve (40) that is secured against rotation and movable in the direction of translation.

4. An automotive parking brake according to claim 7,
characterized in that the sleeve (40) extends through an anti-rotation ring (48) on which the brake piston (44) is slidably movable in axial direction.

5. An automotive parking brake according to claim 1,
characterized in that the gear arrangement (100) comprises a screw spindle/nut arrangement (102, 104) which is accommodated between two brake shoes (110, 112) and coupled with an electric motor or with the electric motor (118), respectively, so as to be rotatingly driven.

6. An automotive parking brake according to claim 5,
characterized in that the nut (104) comprises a counter pinion (124) at its outer circumference, the rotation of which effects an expansion or contraction movement of the screw spindle/nut arrangement (102, 104) so that the counter pinion (124) engages a pinion (122) which is preferably coupled with the electric motor (118) via a reduction gear (130).

7. An automotice parking brake according to claim 6,
characterized in that the pinion (122) and the counter pinion (124) form an angle drive.

8. An automotive parking brake according to one of claims 5 to 7,
characterized in that a sleeve (105) bears against the nut (104) with the counter pinion (124), which at least partially surrounds the screw spindle (102) and, together with same, is adapted to exercise the expansion or contraction movement upon a rotation of the nut (104).

9. An automotive parking brake according to one of claims 5 to 8,
characterized in that the free end of the sleeve (105) and/or the free end of the screw spindle (102) are/is connected, preferably secured against rotation, with one web plate (132, 134) each of a support (136, 138) of two drum brake linings (142, 144).

10. An automotive parking brake according to one of the previous claims,
characterized in that the other end of the flexible shaft (58) is connected with a ring gear (62) and the manual crank (66) comprises a bevel gear (64) which can be brought into engagement with the ring gear (62).

11. An automotive parking brake according to claim 10,
characterized in that the bevel gear (64) is resiliently biased while disengaged from the ring gear (62) and the manual crank (66) is pivotable about an axis (C) which extends perpendicularly to the centre axis of the bevel gear (64) and comprises a cam (68) which, upon swivelling the manual crank (66) from a rest position into an actuation position, directly or indirectly engages the rear side of the bevel gear (64) and thus urges the bevel gear against the resilient bias into engagement with the ring gear (62).

12. An automotive parking brake according to one of the previous claims,
characterized in that the other end of the flexible shaft (58) is designed for being arranged in the interior of a motor vehicle, in particular in the space between the two front seats.

13. A parking brake system for motor vehicles,
characterized by two automotive parking brakes according to one of claims 1 to 5, which are associated with one and the same axle of a motor vehicle, and the flexible shafts (58) of which are rotatably coupled at the other end of each flexible shaft, so as to be mechanically actuatable together by means of the manual crank (66).

14. A parking brake system according to claim 13,
characterized in that the two flexible shafts (58) are connected with one output each of a differential gear (70) and the input of the differential gear is adapted to be driven by means of the manual crank (66).

15. A parking brake system according to claim 14,
characterized in that the ring gear (62) is connected with the housing (72) of the differential gear (70) in a non-rotatable manner.

## Revendications

1. Frein de stationnement de véhicule pouvant être actionné électriquement, comprenant un actionnement de secours, dans lequel le frein de stationnement est un frein à tambour (10'),
caractérisé en ce que ses segments de frein (110, 112) peuvent être serrés et desserrés au moyen d'un dispositif de transmission (100) disposé dans ou sur le frein et présentant une entrée de force ainsi qu'une sortie de force, l'entrée de force du dispositif de transmission (100) étant accouplé à l'extrémité d'un arbre flexible (58) dont l'autre extrémité, disposée éloignée du frein, peut être accouplée à une manivelle (66) pour pouvoir actionner mécaniquement le frein de stationnement dans le cas d'une défaillance de l'actionnement électrique, et ladite une extrémité de l'arbre flexible (58) étant reliée à une extrémité (21) de l'arbre d'induit (20) d'un moteur électrique (118) fixé au frein qui entraîne aussi le dispositif de transmission (100).

2. Frein de stationnement de véhicule pouvant être actionné électriquement, comprenant un actionnement de secours, dans lequel le frein de stationnement est un frein à disque, en particulier un frein à disque à étrier flottant à plaquettes (10) dont les mâchoires de frein (52, 54) peuvent être serrées et desserrées au moyen d'un dispositif de transmission (100) disposé dans ou sur le frein et présentant une entrée de force ainsi qu'une sortie de force, le frein présentant un moteur électrique (18) entraînant le dispositif de transmission (100),
caractérisé en ce que
- l'entrée de force du dispositif de transmission (100) est accouplée à une extrémité d'un arbre flexible (58) dont l'autre extrémité, disposée éloignée du frein, peut être accouplée à une manivelle (66) pour pouvoir actionner mécaniquement le frein de stationnement dans le cas d'une défaillance de l'actionnement électrique,
- ladite une extrémité de l'arbre flexible (58) est reliée à une extrémité (21) de l'arbre d'induit (20) du moteur électrique (18),
- le dispositif de transmission (100) comprend une vis sans fin (22) qui engrène avec une roue dentée tangente (24) qui est reliée à un piston de frein (44) du frein à disque et en ce que
- l'arbre d'induit (20) du moteur électrique (18) entraîne en rotation la vis sans fin (22).

3. Frein de stationnement de véhicule selon la revendication 2,
caractérisé en ce que la vis sans fin entraîne un arbre (28) disposé coaxial par rapport au piston de frein (44), lequel arbre présente une portion d'extrémité (34) pourvue d'un filetage extérieur (36) qui est en prise avec un taraudage (38) formé dans une douille (40) immobilisée en rotation, mobile dans une direction de translation.

4. Frein de stationnement de véhicule selon la revendication 3,
caractérisé en ce que la douille (40) est guidée par une bague d'immobilisation en rotation (48) sur laquelle le piston de frein (44) peut coulisser dans la direction axiale.

5. Frein de stationnement de véhicule selon la revendication 1,
caractérisé en ce que le dispositif de transmission (100) présente un dispositif à broche filetée et à écrou (102, 104) qui est logé entre deux segments de frein (110, 112) et peut être accouplé pour être entraîné en rotation à un moteur électrique respectivement au moteur électrique (118).

6. Frein de stationnement de véhicule selon la revendication 5,
caractérisé en ce que l'écrou (104) présente sur sa périphérie extérieure un pignon conjugué (124) dont la rotation engendre un mouvement d'expansion ou de contraction du dispositif à broche filetée et à écrou (102, 104), le pignon conjugué (124) engrenant avec un pignon (122) qui est accouplé au moteur électrique (118), de préférence par l'intermédiaire d'une démultiplication (130).

7. Frein de stationnement de véhicule selon la revendication 6,
caractérisé en ce que le pignon (122) et le pignon conjugué (124) forment une transmission à angle.

8. Frein de stationnement de véhicule selon l'une quelconque des revendications 5 à 7,
caractérisé en ce qu'un manchon (105) s'appuie sur l'écrou (104) présentant le pignon conjugué (124), lequel manchon recouvre au moins partiellement la broche filetée (102) et est agencé avec celle-ci lors d'une rotation de l'écrou (104) pour exercer le mouvement d'expansion ou de contraction.

9. Frein de stationnement de véhicule selon l'une quelconque des revendications 5 à 8,
caractérisé en ce que l'extrémité libre du manchon (105) et/ou l'extrémité libre de la broche filetée (102) sont respectivement reliées, de préférence avec immobilisation en rotation, à un segment (132, 134) d'un support (136, 138) de deux garnitures de frein à tambour (142, 144).

10. Frein de stationnement de véhicule selon l'une quelconque des revendications précédentes,
caractérisé en ce que l'autre extrémité de l'arbre flexible (58) est reliée à une couronne de différentiel (62) et la manivelle (66) présente une roue conique (64) pouvant être mise en prise avec la couronne de différentiel (62).

11. Frein de stationnement de véhicule selon la revendication 10,
caractérisé en ce que la roue conique (64) est poussée constamment élastiquement hors d'engagement mécanique avec la couronne de différentiel (62) et la manivelle (66) peut pivoter autour d'un axe (C) s'étendant perpendiculairement à l'axe médian de la roue conique (64) et présente une saillie (68) qui, lors d'un pivotement de la manivelle (66), vient en prise d'une position de repos dans une position d'actionnement directement ou indirectement avec la face arrière de la roue conique (64) et presse la roue conique contre la force de poussée permanente élastique en prise avec la couronne de différentiel (62).

12. Frein de stationnement de véhicule selon l'une quelconque des revendications précédentes,
caractérisé en ce que l'autre extrémité de l'arbre flexible (58) est conçue pour être disposée dans l'habitacle d'un véhicule, en particulier pour être disposée dans l'espace entre les deux sièges avants.

13. Système de freinage pour véhicule,
caractérisé par deux freins de stationnement de véhicule selon l'une quelconque des revendications 1 à 5, qui sont associés à un et au même essieu d'un véhicule et dont les arbres flexibles (58) sont accouplés tournants ensemble à l'autre extrémité de chaque arbre flexible pour pouvoir être actionnés mécaniquement ensemble au moyen de la manivelle (66).

14. Système de freinage selon la revendication 13,
caractérisé en ce que les deux arbres flexibles (58) sont reliés chacun à une sortie d'une transmission différentielle (70) et en ce que l'entrée de la transmission différentielle peut être entraînée au moyen de la manivelle (66).

15. Système de freinage selon la revendication 14,
caractérisé en ce que la couronne de différentiel (62) est reliée fixe en rotation au boîtier (72) de la transmission différentielle (70).
